# EUROPEAN PATENT SPECIFICATION

(11) **EP 3 380 992 B1**
(45) Date of publication and mention of the grant of the patent: **27.04.2022**
(21) Application number: 17705215.6
(22) Date of filing: 25.01.2017
(51) Int. Cl.: G06N 3/04

(54) **GENERATING IMAGES USING NEURAL NETWORKS**
GENERIEREN VON BILDERN MIT NEURALEN NETZWERKEN
GÉNÉRATION D'IMAGES À L'AIDE DES RÉSEAUX NEURALS

(30) Priority: 25.01.2016 US 201662286915 P
(43) Date of publication of application: 03.10.2018
(73) Proprietor: Deepmind Technologies Limited, London EC4A 3TW (GB)
(72) Inventor: KALCHBRENNER, Nal Emmerich, Kings Cross London N1C 4AG (GB); VAN DEN OORD, Aaron Gerard Antonius, Kings Cross London N1C 4AG (GB)
(74) Representative: Kennedy, Richard E.
(86) International application number: PCT/US2017/014990
(87) International publication number: WO 2017/132288

(56) References cited:
- US-B1- 8 660 345
- Lucas Theis ET AL: "Generative Image Modeling Using Spatial LSTMs", , 10 June 2015 (2015-06-10), XP055365523, Retrieved from the Internet: URL:https://arxiv.org/pdf/1506.03478.pdf

## Description

### BACKGROUND

This specification relates to generating images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step.

An example of a recurrent neural network is a Long Short-Term Memory (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network.

Relevant prior art is Lucas Theis ET AL: "Generative Image Modeling Using Spatial LSTMs", 10 June 2015, which discloses a recurrent image model based on multi-dimensional long short-term memory units which are particularly suited for image modeling due to their spatial structure. The model scales to images of arbitrary size and its likelihood is computationally tractable.

### SUMMARY

This specification describes how a system implemented as computer programs on one or more computers in one or more locations can generate an output image from a neural network input.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Particular embodiments of the subject matter described in this specification can be implemented so as to realize one or more of the following advantages. A neural network system as described in this specification can more accurately generate images from neural network inputs. In particular, by modeling the color values for the pixels in output images as discrete rather than continuous values, training of the neural network can be improved, i.e., the neural network can be trained more quickly, and the quality of the output images generated by the trained neural network can be increased. By generating the output image pixel by pixel and color value by color value, i.e., so that the color value for a given color channel for a given pixel is conditioned on both color values for earlier pixels and any earlier color channels within the given pixel, the quality of output images that are generated can be improved. By generating the image in this manner using the neural network system described in this specification, the neural network can capture the full generality of pixel inter-dependencies without introducing independence assumptions that have been necessary in existing models.

The details of one or more embodiments of the subject matter described in this specification are set forth in the accompanying drawings and the description below. Other features, aspects, and advantages of the subject matter will become apparent from the description, the drawings, and the claims. The claims define the scope of the invention.

### BRIEF DESCRIPTION OF THE DRAWINGS

FIG. 1 shows an example neural network system.
FIG. 2 is a flow diagram of an example process for generating an output image from a neural network input.
FIG. 3 is a flow diagram of an example process for generating a color value for a given color channel for a given pixel in an output image.

Like reference numbers and designations in the various drawings indicate like elements.

### DETAILED DESCRIPTION

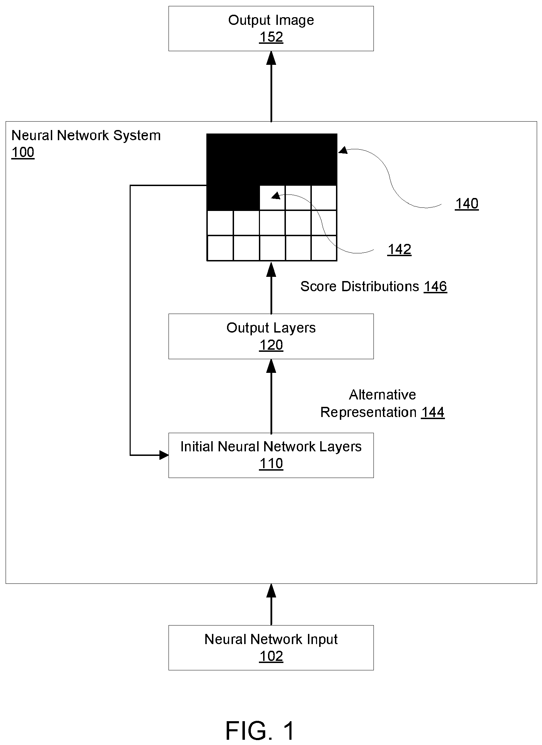

FIG. 1 shows an example neural network system 100. The neural network system 100 is an example of a system implemented as computer programs on one or more computers in one or more locations, in which the systems, components, and techniques described below can be implemented.

The neural network system 100 receives a neural network input and generates an output image from the neural network input. For example, the neural network system 100 can receive a neural network input 102 and generate an output image 152 from the neural network 102.

In some implementations, the neural network system 100 can be used for lossless compression of images or for generating new images that have similar features to images on which the system was trained.

In particular, for lossless compression, the neural network input can be an image and the neural network system 100 may generate an output image that is a reconstruction of the input image.

The neural network system 100 can then store at least a portion of the score distributions generated by the output layers of the neural network system 100 as described below for use in arithmetic encoding of the image. An example technique for using score distributions generated by a machine learning model for arithmetic encoding and decoding is described in Aaron van den Oord and Benjamin Schrauwen, The Student-t Mixture as a Natural Image Patch Prior with Application to Image Compression, available at http://www.jmlr.org/papers/volume15/vandenoord14a/vandenoord14a.pdf.

For image generation, during training, the neural network input is an image and the neural network system 100 generates an output image that is a reconstruction of the input image.

In an example not representing the invention, after training, the neural network system 100 may generate an output image pixel by pixel without being conditioned on an input.

In particular, for a given input, the neural network system 100 generates an output image that includes a predetermined number of pixels arranged in a two-dimensional map, with each pixel having a respective color value for each of multiple color channels. For example, the neural network system 100 can generate images that include a red color channel, a green color channel, and a blue color channel. As a different example, the neural network system 100 can generate images that include a cyan color channel, a magenta color channel, a yellow color channel, and a black color channel. The multiple color channels are arranged according to predetermined order, e.g., red, green, and then blue, or blue, red, and then green.

Generally, the neural network system 100 generates the color values in the output image pixel by pixel in a sequence of pixels taken from the output image. That is, the neural network system 100 orders the pixels in the output image into a sequence and then generates the color values for each pixel in the output image one by one in order according to the sequence.

For example, the sequence may start at the top left corner of the output image and proceed row by row through the output image, with the last pixel in the sequence being the pixel in the bottom right corner of the output image. In this example, the neural network system 100 first generates the color values for the top left corner pixel and then proceeds to the next pixel in the top row of the image.

In particular, for a given color channel of a given pixel in the output image, the neural network system 100 generates the color value for the color channel of the given pixel conditioned on (i) color values for pixels before the pixel in the sequence and (ii) color values for the pixel for any color channels before the color channel in the order of color channels. During training or for image compression, because the output image is a reconstruction of the neural network input, i.e., the input image, these color values can be taken from the corresponding pixels in the input image rather than from the output image.

In particular, the neural network system 100 includes one or more initial neural network layers 110 and one or more output layers 120.

After a given color value for a given color channel of a given pixel in the output image has been generated, the initial neural network layers 110 are configured to process the current output image, i.e., the output image that includes the color values that have already been generated for the output image, to generate an alternative representation of the current output image.

For example, the initial neural network layers 110 can process a current output image 140 to generate an alternative representation 142 of the current output image 140.

As shown in FIG. 1, the shaded portion of the current output image 140 denotes pixels for which color values have already been generated by the neural network system 100, while the unshaded portion of the current output image 140 denotes pixels for which color values have not already been generated.

The one or more output layers 120 receive the alternative representation and generate a score distribution over a discrete set of possible color values for the next color channel in the image. For example, the discrete set of possible color values can be the set of integers from zero to two hundred fifty-five, inclusive, with the score distribution including a respective score for each of the integers in the set. The scores in the score distribution can represent, for each possible pixel value, the likelihood, e.g., the probability, that the pixel value should be the value of the given color channel for the task that the system is configured to perform.

If the given color channel referenced above is the last color channel in the predetermined ordering of color channels, the output layers 120 generate a score distribution for the first color channel in the next pixel in the sequence after the given pixel. In the example of FIG. 1, the output layers 120 generate a score distribution 146 for the first color channel of a next pixel 142 in the output image 140.

If the given color channel referenced above is not the last color channel in the predetermined ordering, the output layers 120 generate a score distribution for the next color channel after the given color channel in the order of color channels for the given pixel. For example, if the order of the color channels is red, green, and then blue and the last color value generated was for the green color channel of the given pixel, the score distribution generated by the output layers 120 is the score distribution for the blue color channel of the given pixel.

In some implementations, the neural network system 100 includes a single output layer, e.g., a single softmax layer, that generates the score distributions for all of the color channels.

In some other implementations, the neural network system 100 includes a respective output layer, e.g., a respective softmax layer, corresponding to each of the color channels, and each output layer generates the score distribution for the corresponding color channel.

In some implementations and as described in more detail below, the alternative representation is a feature map that includes features for each color channel of each pixel in the output image. In these implementations, when generating the color value for a given channel of a given pixel, the output layer uses the corresponding portion of the alternative representation, i.e., uses the portion of the alternative representation that includes the features of the given color channel of the given pixel.

The neural network system 100 then selects a value for the current color channel, i.e., either the first color channel in the next pixel in the sequence after the given pixel or the next color channel after the given color channel in the order of color channels for the given pixel, from the generated score distribution. For example, the neural network system 100 can sample a color value in accordance with the score distribution or select the highest-scoring color value according to the score distribution

The initial neural network layers 110 can be configured in any of a variety of ways to allow the layers 110 to generate the alternative representation conditioned on the current output image, i.e., and not on any color values in the output image that have yet to be generated by the neural network system 100.

In some implementations, the initial neural network layers 110 are a fully convolutional neural network that is made up of multiple convolutional neural network layers that each preserve the spatial resolution of the input to the initial neural network layers 110. That is, the spatial resolution of the input to the initial neural network layers 110 and the output of each of the convolutional neural network layers have the same spatial resolution, i.e., have the same number of pixels as the output image, while the number of features generated for each pixel by the convolutional neural network layers can vary.

However, throughout the processing, the features for each input position, i.e., at each pixel, at every layer in the network are split into multiple portions, with each corresponding to one of the color channels.

Thus, the alternative representation generated by the initial neural network layers 110 includes a respective portion for each of the color channel values for the given pixel, and, when generating the score distribution for a given color channel, the output layers 120 are configured to process the portion corresponding to the given color channel.

To ensure that the convolutional neural network layers are conditioned only on the already generated output values, each convolutional neural network layer is configured to apply a convolution that is masked such that the portion of the alternative representation corresponding to a given color channel for a given pixel is only generated based on (i) pixels in the output image that are before the pixel in the sequence and (ii) color channel data for the pixel for color channels before the given color channel in the order of color channels.

For the first convolutional layer, i.e., the layer that receives the current output image as input, the mask restricts the connections to a given pixel in the output feature map of the first convolutional layer to those neighboring pixels in the current output image that are before the given pixel in the sequence and to those colors in the corresponding pixel in the current output image that have already been generated.

For additional convolutional layers, the mask restricts the connections in a given pixel in the output feature map of the additional convolutional layer to those neighboring pixels in the input feature map to the additional convolutional layer that are before the given pixel in the sequence, to features corresponding to those colors in the corresponding pixel in the input feature map that have already been generated, and to features corresponding to the given color in the corresponding pixel in the input feature map.

The neural network system 100 can implement this masking in any of a variety of ways. For example, each convolutional layer can have a kernel with the corresponding weights zeroed out.

In some other implementations, the initial neural network layers 110 include multiple LSTM layers that are arranged in a stack one after the other. Like the convolutional neural network layers, the LSTM layers preserve the spatial dimensions of the input and the features generated by each LSTM layer for each input position at every layer in the network are split into multiple portions, with each corresponding to one of the color channels.

Each of these LSTM layers apply convolutions to the input feature map to the LSTM layer, i.e., the hidden state of the preceding LSTM layer or the current output image, to generate an input-to-state component and apply convolutions to the previous hidden state of the layer to generate a state-to-state-component. The LSTM layer then generates the values of the gates for the LSTM layer from the input-to-state component and the state-to-state component and generates the updated hidden state and the updated cell state for the layer from the gate values and the preceding cell state.

In some of these implementations, the LSTM layers are row LSTM layers that process an input feature map row by row from top to bottom computing features for a whole row at once.

That is, for each row of the input feature map, a row LSTM layer is configured to compute an input-to-state component of the row LSTM layer for the entire input feature map, e.g., using a one-dimensional convolution, and, after computing the input-to-state component for the entire input feature map, use the input-to-state component in processing the input feature map row by row from top to bottom computing features for a whole row at once.

To ensure that the row LSTM layers do not condition outputs on color values that have not already been generated, the convolution used by the row LSTM layer to generate the input-to-state component is masked as described above for the convolutional neural network layers.

In others of these implementations, the LSTM layers are diagonal bidirectional LSTM (BiLSTM) layers.

Generally, a bidirectional LSTM layer is configured to generate an output map for one direction and an output map for another direction and to combine the two output maps to generate the final output map for the layer. That is, the bidirectional LSTM layer computes state-to-state and input-to-state components for each of the two directions and then generates the output map for each direction from the state-to-state and input-to-state components for that direction.

In particular, each diagonal BiLSTM layer is configured to scan an input feature map in diagonal fashion along a first direction and in diagonal fashion along a second direction to generate the output feature map of the layer.

More specifically, each diagonal BiLSTM layer is configured to skew the input feature map into a space that allows for easily applying convolutions along diagonals, e.g., by offsetting each row in the input feature map by one position with respect to the previous row.

For each of the two directions, the diagonal BiLSTM layer is then configured to compute the input-to-state component for the diagonal biLSTM layer for the direction by applying a 1 × 1 convolution to the skewed input feature map and compute a state-to-state component of the diagonal biLSTM layer for the direction by applying a column-wise convolution to the skewed input feature map. In some implementations, the column-wise convolution has a kernel of size 2 × 1.

The diagonal BiLSTM layer is further configured to generate a skewed output feature map for each direction, e.g., a left skewed output feature map and a right skewed output feature map, from the state-to-state and input-to-state components for the direction as described above and to skew each skewed output feature map back to match the spatial dimensions of the input feature map by removing the offset positions. The diagonal BiLSTM layer then shifts the right output map down by one row and adds the shifted right output map to the left output map to generate the final output map for the layer.

As with the row LSTM layers, the convolutions applied by the diagonal BiLSTM layers to generate the state-to-state components may also be masked as described above.

In some implementations, the initial neural network layers 110 include a first convolutional layer that receives the current output image as input and for which the mask restricts the connections to a given pixel in the output feature map of the first convolutional layer to those neighboring pixels in the current output image that are before the given pixel in the sequence and to those colors in the corresponding pixel in the current output image that have already been generated followed by one or more row LSTM layers or one or more diagonal BiLSTM layers.

In some implementations, the initial neural network layers 110 include skip connections between layers, residual connections between layers, or both.

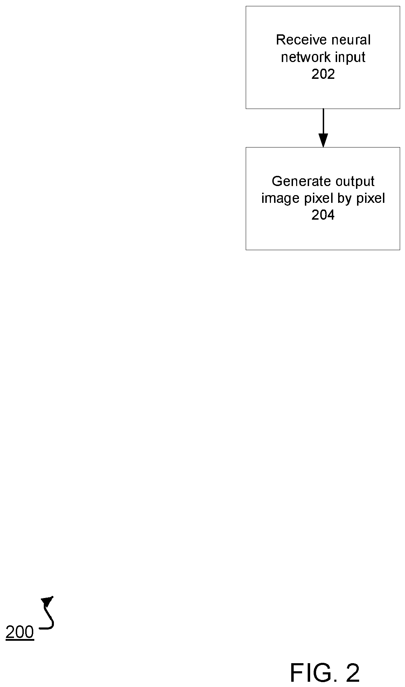

FIG. 2 is a flow diagram of an example process 200 for generating an output image from a neural network input. For convenience, the process 200 will be described as being performed by a system of one or more computers located in one or more locations. For example, a neural network system, e.g., the neural network system 100 of FIG.1, appropriately programmed, can perform the process 200.

The process 200 can be performed during training of the neural network to generate output images. For example, the process 200 can be a forward pass of the training process. The process 200 can also be performed as part of compressing the neural network input, i.e., the input image.

The system receives a neural network input (step 202). As described above, the neural network input is an input image.

The system generates an output image from the neural network input pixel by pixel in a sequence of pixels taken from the output image (step 204). That is, the system generates the color values for each pixel in the output image one by one in order according to the sequence, so that color values for pixels earlier in the sequence are generated before color values later in the sequence. Within each pixel, the system generates the color values for the color channels of the pixel one by one according to the predetermined order of the color channels. In particular, the system generates each color value for each pixel conditioned on (i) color values for pixels for pixels before the pixel in the sequence and (ii) color values for the pixel for any color channels before the color channel in the order of color channels. During training or for image compression, because the output image is a reconstruction of the neural network input, i.e., the input image, these color values can be taken from the corresponding pixels in the input image rather than from the output image.

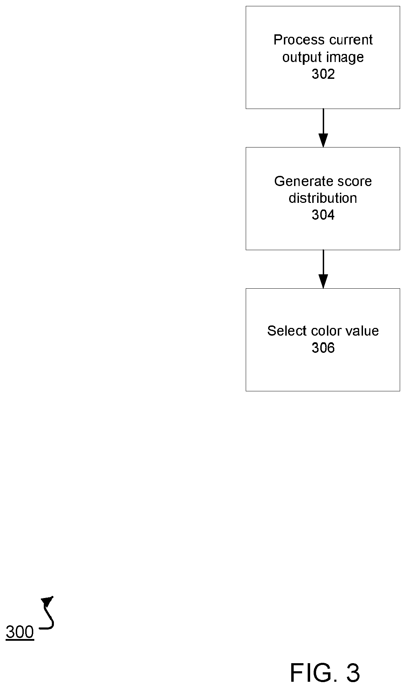

FIG. 3 is a flow diagram of an example process 300 for generating a color value for a given color channel of a given pixel of an output image. For convenience, the process 300 will be described as being performed by a system of one or more computers located in one or more locations. For example, a neural network system, e.g., the neural network system 100 of FIG. 1, appropriately programmed, can perform the process 300.

The system processes a current output image through the initial neural network layers to generate an alternative representation (step 302). The current output image is the image that includes color values for each of the color channels for the pixels before the given pixel in the sequence and color values for any color channels before the given color channel in the order for the given pixel. As described above, the initial neural network layers are configured to apply convolutions that are masked so that the alternative representation is conditioned on the already generated color values and not on any color values that have yet to be generated.

The alternative representation includes a respective portion corresponding to each of the color channels of the given pixel.

The system processes the portion of the alternative representation corresponding to the given color channel using the output layer, e.g., the softmax layer, corresponding to the given color channel to generate a score distribution over the possible color values for the given color channel (step 304). As described above, in some implementations a single output layer corresponds to all of the color channels while in other implementations each color channel has a different corresponding output layer.

The system selects a color value for the given color channel of the given pixel using the score distribution (step 306), e.g., by selecting the highest-scoring color channel or by sampling from the score distribution.

The system can repeat the process 300 for each color channel of each pixel in the output image to generate color values for each pixel in the output image.

The system can perform the processes 200 and 300 for neural network inputs for which the desired output, i.e., the output image that should be generated by the system for the input, is not known.

The system can also perform the processes 200 and 300 on neural network inputs in a set of training data, i.e., a set of inputs for which the output image that should be generated by the system is known, in order to train the initial neural network layers and, if the output layers have parameters, the output layers, i.e., to determine trained values for the parameters of the initial neural network layers and, optionally, the output layers. The processes 200 and 300 can be performed repeatedly on inputs selected from a set of training data as part of a conventional machine learning training technique to train the initial neural network layers, e.g., a stochastic gradient descent with backpropagation training technique.

During training, because the output image that should be generated is known in advance, the computations performed by the initial neural network layers can be accelerated to reduce the amount of time and computing resources necessary to process a given training neural network input and, therefore, to decrease the time required for training, to improve the performance of the trained neural network, or both.

For example, when the initial neural network layers are a fully convolutional neural network, the processing necessary for the initial neural network layers to generate the alternative representations can be done in parallel rather than sequentially because the entire output image is available from the beginning of the computation. That is, as described above, the system can use color values for the input image in place of already generated output image pixel color values. Because the convolutions are masked, the system can generate the entire alternative representation in parallel based on the input image.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed.

Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A neural network system (100) implemented by one or more computers, the neural network system being configured for image generation, wherein the neural network system is configured to receive a neural network input (102) and to generate an output image (152) from the neural network input, the output image being generated based on images on which the system was trained, the output image comprising a plurality of pixels arranged in a two-dimensional map, each pixel having a respective color value for each of a plurality of color channels, and the neural network system comprising:
one or more initial neural network layers (110) configured to receive the neural network input and to process the neural network input to generate an alternative representation of the neural network input, wherein the neural network input comprises an image; and
one or more output layers (120), wherein the output layers are configured to receive the alternative representation and to generate color values in the output image pixel by pixel in accordance with a sequence of pixels of the output image thereby to generate the output image, wherein generating the color values comprises, for each pixel in the output image, generating a respective score distribution comprising a probability distribution over a discrete set of possible color values for each of the plurality of color channels
wherein during training, the neural network input comprises an input image and the output image comprises a reconstruction of the input image.

2. The neural network system of claim 1, wherein the plurality of color channels are ordered, wherein the one or more output layers comprise a respective output layer corresponding to each of the plurality of color channels, and wherein each of the output layers is configured to, for each pixel of the output image:
generate the respective probability distribution over the discrete set of possible color values for the color channel corresponding to the output layer conditioned on (i) color values for pixels for pixels before the pixel in the sequence and (ii) color values for the pixel for any color channels before the color channel corresponding to the output layer in the order of color channels.

3. The neural network system of claim 2, wherein, for each pixel, each of the output layers is configured to receive a portion of the alternative representation corresponding to the color channel and context information based on (i) color values for pixels for pixels before the pixel in the sequence and (ii) color values for the pixel for any color channels before the color channel corresponding to the output layer in the order of color channels.

4. The neural network system of claim 3, wherein the neural network system is configured to apply a mask to outputs of neural network layers in the one or more initial neural network layers such that the portion of the alternative representation corresponding to the color channel is only generated based on pixels before the pixel in the sequence and color channel data for the pixel for color channels before the color channel corresponding to the output layer in the order of color channels.

5. The neural network system of any one of claims 1-4, wherein each of the output layers is a softmax layer.

6. The neural network system of any one of claims 1-5, wherein the one or more initial neural network layers comprise a row long short-term memory (LSTM) layer, and wherein the row LSTM layer is configured to process an input image row by row from top to bottom computing features for a whole row at once, wherein, optionally, the row LSTM layer computes the features using a one-dimensional convolution.

7. The neural network system of claim 6, wherein the row LSTM layer is configured to:
compute an input-to-state component of the row LSTM layer for the entire input image; and
after computing the input-to-state component for the entire input image, use the input-to-state component in processing the input image row by row from top to bottom computing features for a whole row at once.

8. The neural network system of any one of claims 1-6, wherein the one or more initial neural network layers comprise a diagonal bidirectional LSTM (BiLSTM) layer, and wherein the diagonal BiLSTM layer is configured to:
scan an input image map in diagonal fashion along a first direction and in diagonal fashion along a second direction to generate features of the input image map.

9. The neural network system of claim 8, wherein the diagonal BiLSTM layer is configured to:
skew the input image map into a space that allows for easily applying convolutions along diagonals; and
for each of the first direction and the second direction:
compute an input-to-state component of the diagonal biLSTM layer for the direction by applying a 1 × 1 convolution to the skewed input image map; and
compute a state-to-state recurrent component of the diagonal biLSTM layer for the direction by applying a column-wise convolution to the skewed input image map,
wherein, optionally, the column-wise convolution has a kernel of size 2 × 1.

10. The neural network system of any one of claims 1-9, wherein the initial neural network layers comprise a plurality of LSTM layers, and wherein the plurality of LSTM layers are configured with residual connection from one LSTM layer to another LSTM layer in the plurality of LSTM layers.

11. The neural network system of any one of claims 1-10, and wherein the one or more initial neural network layers comprise one or more convolutional neural network layers.

12. The neural network system of any one of claims 1-11, wherein the pixels in the sequence of pixels are taken from the output image row by row.

13. One or more computer storage media encoded with instructions that, when executed by one or more computers, cause the one or more computers to perform operations to implement the respective neural network system of any one of claims 1-12.

14. A method comprising:
receiving a neural network input image; and
processing the neural network input image using the neural network system of any one of claims 1-12 to generate an output image from the neural network input image.

## Patentansprüche

1. Neuronales Netzwerksystem (100), implementiert durch einen oder mehrere Computer, wobei das neuronale Netzwerksystem zur Bilderzeugung konfiguriert ist, wobei das neuronale Netzwerksystem konfiguriert ist, eine neuronale Netzwerkeingabe (102) zu empfangen und ein Ausgabebild (152) anhand der neuronalen Netzwerkeingabe zu erzeugen, wobei das Ausgabebild basierend auf Bildern erzeugt wird, mit denen das System trainiert wurde, wobei das Ausgabebild eine Vielzahl von Pixeln umfasst, die in einer zweidimensionalen Karte angeordnet sind, wobei jedes Pixel einen jeweiligen Farbwert für jeden einer Vielzahl von Farbkanälen aufweist, und wobei das neuronale Netzwerksystem Folgendes umfasst:
eine oder mehrere anfängliche neuronale Netzwerkschichten (110), die konfiguriert sind, die neuronale Netzwerkeingabe zu empfangen und die neuronale Netzwerkeingabe zu verarbeiten, um eine alternative Darstellung der neuronalen Netzwerkeingabe zu erzeugen, wobei die neuronale Netzwerkeingabe ein Bild umfasst; und
eine oder mehrere Ausgabeschichten (120), wobei die Ausgabeschichten konfiguriert sind, die alternative Darstellung zu empfangen und Farbwerte in dem Ausgabebild Pixel für Pixel gemäß einer Sequenz von Pixeln des Ausgabebilds zu erzeugen, um dadurch das Ausgabebild zu erzeugen, wobei das Erzeugen der Farbwerte, für jedes Pixel in dem Ausgabebild, ein Erzeugen einer jeweiligen Bewertungsverteilung umfasst, die eine Wahrscheinlichkeitsverteilung über einen diskreten Satz von möglichen Farbwerten für jeden der Vielzahl von Farbkanälen umfasst,
wobei, während des Trainings, die neuronale Netzwerkeingabe ein Eingabebild umfasst, und das Ausgabebild eine Rekonstruktion des Eingabebilds umfasst.

2. Neuronales Netzwerksystem nach Anspruch 1, wobei die Vielzahl von Farbkanälen geordnet sind, wobei die eine oder die mehreren Ausgabeschichten eine jeweilige Ausgabeschicht umfassen, die jedem der Vielzahl von Farbkanälen entspricht, und wobei jede der Ausgabeschichten, für jedes Pixel des Ausgabebildes, konfiguriert ist zum:
Erzeugen der jeweiligen Wahrscheinlichkeitsverteilung über den diskreten Satz von möglichen Farbwerten für den Farbkanal, der der Ausgabeschicht entspricht, abhängig von (i) Farbwerten für Pixel für Pixel vor dem Pixel in der Sequenz und (ii) Farbwerten für das Pixel für beliebige Farbkanäle vor dem Farbkanal, der der Ausgabeschicht entspricht, in der Reihenfolge von Farbkanälen.

3. Neuronales Netzwerksystem nach Anspruch 2, wobei, für jedes Pixel, jede der Ausgabeschichten konfiguriert ist, einen Teil der alternativen Darstellung, der dem Farbkanal entspricht, und Kontextinformationen zu empfangen, basierend auf (i) Farbwerten für Pixel für Pixel vor dem Pixel in der Sequenz und (ii) Farbwerten für das Pixel für beliebige Farbkanäle vor dem Farbkanal, der der Ausgabeschicht entspricht, in der Reihenfolge von Farbkanälen.

4. Neuronales Netzwerksystem nach Anspruch 3, wobei das neuronale Netzwerksystem konfiguriert ist, eine Maske auf Ausgaben von neuronalen Netzwerkschichten in der einen oder den mehreren anfänglichen neuronalen Netzwerkschichten anzuwenden, sodass der Teil der alternativen Darstellung, der dem Farbkanal entspricht, nur basierend auf Pixeln vor dem Pixel in der Sequenz und auf Farbkanaldaten für das Pixel für Farbkanäle vor dem Farbkanal, der der Ausgabeschicht entspricht, in der Reihenfolge von Farbkanälen erzeugt wird.

5. Neuronales Netzwerksystem nach einem der Ansprüche 1-4, wobei jede der Ausgabeschichten eine Softmax-Schicht ist.

6. Neuronales Netzwerksystem nach einem der Ansprüche 1-5, wobei die eine oder die mehreren anfänglichen neuronalen Netzwerkschichten eine Zeilen-LSTM(Long Short-Term Memory)-Schicht umfassen, und wobei die Zeilen-LSTM-Schicht konfiguriert ist, ein Eingabebild zeilenweise von oben nach unten zu verarbeiten und Merkmale für eine ganze Zeile auf einmal zu berechnen, wobei, optional, die Zeilen-LSTM-Schicht die Merkmale unter Nutzung einer eindimensionalen Faltung berechnet.

7. Neuronales Netzwerksystem nach Anspruch 6, wobei die Zeilen-LSTM-Schicht konfiguriert ist zum:
Berechnen einer Eingabe-Zustand-Komponente der Zeilen-LSTM-Schicht für das gesamte Eingabebild; und
nach dem Berechnen der Eingabe-Zustand-Komponente für das gesamte Eingabebild Nutzen der Eingabe-Zustand-Komponente bei der zeilenweisen Verarbeitung des Eingabebilds von oben nach unten, um die Merkmale für eine ganze Zeile auf einmal zu berechnen.

8. Neuronales Netzwerksystem nach einem der Ansprüche 1-6, wobei die eine oder die mehreren anfänglichen neuronalen Netzwerkschichten eine diagonale bidirektionale LSTM(BiLSTM)-Schicht umfassen, und wobei die diagonale BiLSTM-Schicht konfiguriert ist zum:
Abtasten einer Eingabebildkarte in diagonaler Weise entlang einer ersten Richtung und in diagonaler Weise entlang einer zweiten Richtung, um Merkmale der Eingabebildkarte zu erzeugen.

9. Neuronales Netzwerksystem nach Anspruch 8, wobei die diagonale BiLSTM-Schicht konfiguriert ist zum:
Verzerren der Eingabebildkarte in einen Raum hinein, der das einfache Anwenden von Faltungen entlang von Diagonalen ermöglicht; und
für jede von der ersten Richtung und der zweiten Richtung:
Berechnen einer Eingabe-Zustand-Komponente der diagonalen BiLSTM-Schicht für die Richtung durch Anwenden einer 1×1-Faltung auf die verzerrte Eingabebildkarte; und
Berechnen einer wiederkehrenden Zustand-Zustand-Komponente der diagonalen BiLSTM-Schicht für die Richtung durch Anwenden einer spaltenweisen Faltung auf die verzerrte Eingabebildkarte,
wobei, optional, die spaltenweise Faltung einen Kern der Größe 2 × 1 aufweist.

10. Neuronales Netzwerksystem nach einem der Ansprüche 1-9, wobei die anfänglichen neuronalen Netzwerkschichten eine Vielzahl von LSTM-Schichten umfassen, und wobei die Vielzahl von LSTM-Schichten mit einer Restverbindung von einer LSTM-Schicht zu einer anderen LSTM-Schicht in der Vielzahl von LSTM-Schichten konfiguriert sind.

11. Neuronales Netzwerksystem nach einem der Ansprüche 1-10, wobei die eine oder die mehreren anfänglichen neuronalen Netzwerkschichten eine oder mehrere faltende neuronale Netzwerkschichten umfassen.

12. Neuronales Netzwerksystem nach einem der Ansprüche 1-11, wobei die Pixel in der Sequenz von Pixeln zeilenweise aus dem Ausgabebild entnommen werden.

13. Ein oder mehrere Computerspeichermedien, die mit Anweisungen codiert sind, die, bei Ausführung durch einen oder mehrere Computer, den einen oder die mehreren Computer veranlassen, Operationen zur Implementierung des jeweiligen neuronalen Netzwerksystems nach einem der Ansprüche 1-12 durchzuführen.

14. Verfahren, umfassend:
Empfangen eines Eingabebilds eines neuronalen Netzwerks; und
Verarbeiten des Eingabebilds des neuronalen Netzwerks unter Nutzung des jeweiligen neuronalen Netzwerksystems nach einem der Ansprüche 1-12, um das Ausgabebild anhand des Eingabebilds des neuronalen Netzwerks zu erzeugen.

## Revendications

1. Système de réseau neuronal (100) mis en œuvre par un ou plusieurs ordinateurs, le système de réseau neuronal étant configuré pour une génération d'image, dans lequel le système de réseau neuronal est configuré pour recevoir une entrée de réseau neuronal (102) et pour générer une image de sortie (152) à partir de l'entrée de réseau neuronal, l'image de sortie étant générée sur la base d'images sur lesquelles le système a été entraîné, l'image de sortie comprenant une pluralité de pixels agencés dans une carte bidimensionnelle, chaque pixel ayant une valeur de couleur respective pour chacun d'une pluralité de canaux de couleur, et le système de réseau neuronal comprenant :
une ou plusieurs couches de réseau neuronal initiales (110) configurées pour recevoir l'entrée de réseau neuronal et pour traiter l'entrée de réseau neuronal afin de générer une représentation alternative de l'entrée de réseau neuronal, dans lequel l'entrée de réseau neuronal comprend une image ; et
une ou plusieurs couches de sortie (120), dans lequel les couches de sortie sont configurées pour recevoir la représentation alternative et pour générer des valeurs de couleur dans l'image de sortie pixel par pixel conformément à une séquence de pixels de l'image de sortie pour générer ainsi l'image de sortie, dans lequel la génération des valeurs de couleur comprend, pour chaque pixel dans l'image de sortie, la génération d'une distribution de scores respective comprenant une distribution de probabilités sur un ensemble discret de valeurs de couleur possibles pour chacun de la pluralité de canaux de couleur
dans lequel, pendant l'entraînement, l'entrée de réseau neuronal comprend une image d'entrée et l'image de sortie comprend une reconstruction de l'image d'entrée.

2. Système de réseau neuronal selon la revendication 1, dans lequel la pluralité de canaux de couleur sont ordonnés, dans lequel les une ou plusieurs couches de sortie comprennent une couche de sortie respective correspondant à chacun de la pluralité de canaux de couleur, et dans lequel chacune des couches de sortie est configurée pour, pour chaque pixel de l'image de sortie :
générer la distribution de probabilités respective sur l'ensemble discret de valeurs de couleur possibles pour le canal de couleur correspondant à la couche de sortie conditionnée sur (i) des valeurs de couleur pour des pixels pour des pixels avant le pixel dans la séquence et (ii) des valeurs de couleur pour le pixel pour tout canal de couleur avant le canal de couleur correspondant à la couche de sortie dans l'ordre des canaux de couleur.

3. Système de réseau neuronal selon la revendication 2, dans lequel, pour chaque pixel, chacune des couches de sortie est configurée pour recevoir une partie de la représentation alternative correspondant au canal de couleur et des informations de contexte sur la base (i) de valeurs de couleur pour des pixels pour des pixels avant le pixel dans la séquence et (ii) de valeurs de couleur pour le pixel pour tout canal de couleur avant le canal de couleur correspondant à la couche de sortie dans l'ordre des canaux de couleur.

4. Système de réseau neuronal selon la revendication 3, dans lequel le système de réseau neuronal est configuré pour appliquer un masque à des sorties de couches de réseau neuronal dans les une ou plusieurs couches de réseau neuronal initiales de telle sorte que la partie de la représentation alternative correspondant au canal de couleur soit uniquement générée sur la base de pixels avant le pixel dans la séquence et de données de canal de couleur pour le pixel pour les canaux de couleur avant le canal de couleur correspondant à la couche de sortie dans l'ordre des canaux de couleur.

5. Système de réseau neuronal selon l'une quelconque des revendications 1 à 4, dans lequel chacune des couches de sortie est une couche softmax.

6. Système de réseau neuronal selon l'une quelconque des revendications 1 à 5, dans lequel les une ou plusieurs couches de réseau neuronal initiales comprennent une couche de longue mémoire à court terme (LSTM) de rangée, et dans lequel la couche LSTM de rangée est configurée pour traiter une image d'entrée rangée par rangée de haut en bas en calculant informatiquement des caractéristiques pour toute une rangée à la fois, dans lequel, facultativement, la couche LSTM de rangée calcule informatiquement les caractéristiques en utilisant une convolution unidimensionnelle.

7. Système de réseau neuronal selon la revendication 6, dans lequel la couche LSTM de rangée est configurée pour :
calculer informatiquement une composante entrée-état de la couche LSTM de rangée pour l'image d'entrée entière ; et
après le calcul informatique de la composante entrée-état pour l'image d'entrée entière, utiliser la composante entrée-état dans le traitement de l'image d'entrée rangée par rangée de haut en bas en calculant informatiquement des caractéristiques pour toute une rangée à la fois.

8. Système de réseau neuronal selon l'une quelconque des revendications 1 à 6, dans lequel les une ou plusieurs couches de réseau neuronal initiales comprennent une couche LSTM bidirectionnelle (BiLSTM) diagonale, et dans lequel la couche BiLSTM diagonale est configurée pour :
balayer une carte d'image d'entrée de manière diagonale suivant une première direction et de manière diagonale suivant une deuxième direction afin de générer des caractéristiques de la carte d'image d'entrée.

9. Système de réseau neuronal selon la revendication 8, dans lequel la couche BiLSTM diagonale est configurée pour :
incliner la carte d'image d'entrée en un espace qui permet d'appliquer facilement des convolutions suivant des diagonales ; et
pour chacune de la première direction et de la deuxième direction :
calculer informatiquement une composante entrée-état de la couche biLSTM diagonale pour la direction en appliquant une convolution 1 × 1 à la carte d'image d'entrée inclinée ; et
calculer informatiquement une composante récurrente état-à-état de la couche biLSTM diagonale pour la direction en appliquant une convolution par colonne à la carte d'image d'entrée inclinée,
dans lequel, facultativement, la convolution par colonne a un noyau de taille 2 × 1.

10. Système de réseau neuronal selon l'une quelconque des revendications 1 à 9, dans lequel les couches de réseau neuronal initiales comprennent une pluralité de couches LSTM, et dans lequel la pluralité de couches LSTM sont configurées avec une connexion résiduelle d'une couche LSTM à une autre couche LSTM dans la pluralité de couches LSTM.

11. Système de réseau neuronal selon l'une quelconque des revendications 1 à 10, et dans lequel les une ou plusieurs couches de réseau neuronal initiales comprennent une ou plusieurs couches de réseau neuronal convolutif.

12. Système de réseau neuronal selon l'une quelconque des revendications 1 à 11, dans lequel les pixels dans la séquence de pixels sont prélevés de l'image de sortie rangée par rangée.

13. Un ou plusieurs supports de stockage sur ordinateur codés avec des instructions qui, lorsqu'elles sont exécutées par un ou plusieurs ordinateurs, amènent les un ou plusieurs ordinateurs à réaliser des opérations destinées à mettre en œuvre le système de réseau neuronal respectif de l'une quelconque des revendications 1 à 12.

14. Procédé comprenant :
la réception d'une image d'entrée de réseau neuronal ; et
le traitement de l'image d'entrée de réseau neuronal en utilisant le système de réseau neuronal de l'une quelconque des revendications 1 à 12 afin de générer une image de sortie à partir de l'image d'entrée de réseau neuronal.
